# EUROPEAN PATENT APPLICATION

(11) **EP 4 439 710 A1**
(43) Date of publication of application: **02.10.2024**
(21) Application number: 22894780.0
(22) Date of filing: 15.11.2022
(51) Int. Cl.: H01M 4/36, H01M 4/62

(54) **LITHIUM-RICH COMPOSITE MATERIAL, AND PREPARATION METHOD THEREFOR AND USE THEREOF**

(30) Priority: 22.11.2021 CN 202111390217
(71) Applicant: Shenzhen Innovazone Technology Co., Ltd., Shenzhen, Guangdong 518000 (CN)
(72) Inventor: ZHONG, Zeqin, Shenzhen, Guangdong 518000 (CN); WAN, Yuanxin, Shenzhen, Guangdong 518000 (CN); KONG, Lingyong, Shenzhen, Guangdong 518000 (CN); ZHAO, Zhongke, Shenzhen, Guangdong 518000 (CN); ZHONG, Wen, Shenzhen, Guangdong 518000 (CN); ZHU, Chengben, Shenzhen, Guangdong 518000 (CN); PEI, Xianyinan, Shenzhen, Guangdong 518000 (CN); ZHANG, Yucai, Shenzhen, Guangdong 518000 (CN)
(74) Representative: Laine IP Oy
(86) International application number: PCT/CN2022/131989
(87) International publication number: WO 2023/088247

(57) **Abstract**

Disclosed are a lithium-rich composite material, and a preparation method thereof, and an application thereof. The lithium-rich composite material includes a core and a dense hydrophobic layer coated on the core. The core includes a lithium-rich material, and a material of the dense hydrophobic layer includes a polyanionic electrochemically active material, and the polyanionic electrochemically active material is a phosphate electrode active material. The lithium-rich composite material of the present application includes a dense hydrophobic layer, which has high compactness, low content of residual alkali and high chemical stability when being in contact with an electrolyte. In addition, the preparation method of the lithium-rich composite material can ensure that the structure and the electrochemical performances of the prepared lithium-rich composite material are stable; moreover, the efficiency is high and the production cost is saved.

## Description

This application claims the priority of the Chinese patent application submitted to the CNIPA on Nov. 22, 2021, with an application number 202111390217.4 and titled "LITHIUM-RICH COMPOSITE MATERIAL, PREPARATION METHOD THEREOF, AND APPLICATION THEREOF", the entire contents of which are incorporated by reference in this application.

### TECHNICAL FIELD

The present application relates to the field of secondary batteries, and more particularly to a lithium-rich composite material, preparation method thereof, and application thereof.

### BACKGROUND

The oil energy crisis in the 1960s and 1970s urged people to look for new alternative energy sources. With the enhancement of people's awareness of environmental protection and energy crisis, lithium-ion batteries are considered to be one of the most promising energy sources due to their high operating voltage and energy density, relatively small self-discharge level, no memory effect, no pollution from heavy metal elements, such as lead and cadmium, and long cycle life.

During the first charging process of a lithium-ion battery, a surface of the anode is usually accompanied by the formation of a solid electrolyte (SEI) film. This process consumes a large amount of Li⁺, which means that a part of Li⁺ released from the cathode material is irreversibly consumed, and a reversible specific capacity of a corresponding cell reduces. The anode material, especially silicon-based anode material, will further consume Li⁺, resulting in loss of lithium in the cathode material and reducing the initial coulombic efficiency and battery capacity of the battery. For example, in a lithium-ion battery system using a graphite anode, about 10% of the lithium source will be consumed for the first charge. When the anode material with high specific capacity is used, such as an alloy (silicon, tin, etc.), an oxide (silicon oxide, tin oxide), and an amorphous carbon anode, the consumption of lithium source in the cathode will be further aggravated.

In order to improve the low coulombic efficiency problem caused by the irreversible loss of the anode, in addition to the pre-lithiation of the anode material and the electrode plate, lithium-supplementing on the cathode can also meet the requirements of high energy density. For example, the publicly reported lithium-rich iron-based material has a theoretical capacity as high as 867 mAh/g and a working voltage window consistent with that of conventional lithium-ion battery, and basically does not participate in the electrochemical process in the later stage, thus being a cathode lithium-supplementing additive with broad prospects. Another published cathode lithium-supplementing material Li₅FeO₄ is prepared by a sol-gel method, the use of such material as a cathode lithium-supplementing material of the lithium ion battery has the characteristics of large charge capacity and small discharge capacity. However, such material has harsh environmental adaptability and a large amount of the surface residual alkali, making it difficult to be processed. In another disclosed carbon-coated lithium ferrite material, the carbon source is used for gas-phase coating to isolate the ambient environment, and the contact between lithium ferrite and water in the air is relieved, so as to improve the stability of the material; however, it is always difficult for the coating layer to be completely isolated from contacting with water in the air, resulting in material deterioration and failure. Moreover, after carbon coating, although the electronic conductivity of the carbon-coated lithium ferrite material can be improved, the path of ion conduction is increased and the ion conductivity is affected, which affects the lithium-supplementing effect of the carbon-coated lithium ferrite material. Meanwhile, the carbon-coated lithium ferrite material still has residual alkali in the coating layer or between the interface with the lithium ferrite core, which makes it difficult to be processed. Moreover, the interface activity between the surface and the electrolyte is high, which causes side reactions with the electrolyte and results in a decrease in the electrochemical performance of the battery.

### TECHNICAL PROBLEMS

It is an object of the present application to overcome the above-mentioned deficiencies in the prior art, and to provide a lithium-rich composite material and a preparation method thereof, to solve the technical problems that the existing cathode lithium-supplementing additive in the coating structure has unsatisfactory stability and high activity at the interface with the electrolyte.

It is another object of the present application to provide a cathode plate and a secondary battery comprising the cathode plate, so as to solve the technical problems of unsatisfactory initial coulombic efficiency and battery capacity of the existing secondary batteries.

### TECHNICAL SOLUTIONS

In order to achieve the purpose of the above application, a first aspect of the present application provides a lithium-rich composite material. The lithium-rich composite material of the present application comprises a core and a dense hydrophobic layer coated on the core. The core comprises a lithium-rich material, and a material of the dense hydrophobic layer comprises a polyanionic electrochemically active material, and the polyanionic electrochemically active material is a phosphate electrode active material.

Further, the material of the dense hydrophobic layer further comprises an electronic conductive agent, and the electronic conductive agent and the polyanionic electrochemically active material form a mixture.

Still further, the electronic conductive agent comprises at least one of a conductive carbon material, a conductive oxide, and a conductive organic substance.

Still further, in the dense hydrophobic layer, a mass of the electronic conductive agent accounts for 1 wt. % to 6 wt. % of a mass of the polyanionic electrochemically active material.

Specifically, the conductive carbon material comprises at least one of an amorphous carbon, a carbon nanotube, a graphite, a carbon black, and a graphene. The conductive oxide comprises at least one of In₂O₃, ZnO, and SnOz. The conductive organic substance comprises a conductive polymer.

Further, the dense hydrophobic layer comprises an active material coating layer, the active material coating layer covers the core, and a material of the active material coating layer is the polyanionic electrochemically active material.

Still further, the dense hydrophobic layer further comprises an electron conductor packaging layer, and the electron conductor packaging layer is coated on a surface of the active material coating layer away from the core.

Specifically, a material of the electron conductor packaging layer comprises at least one of a carbon material, a conductive oxide, and a conductive organic substance.

Specifically, a thickness of the electron conductor packaging layer is 1 nm to 100 nm.

Further, a content of the polyanionic electrochemically active material accounts for 0.5 wt. % to 30 wt. % of a content of the lithium-rich composite material.

Further, the polyanionic electrochemically active material comprises at least one of lithium iron phosphate, lithium manganese phosphate, lithium manganese iron phosphate, lithium vanadium phosphate, lithium nickel phosphate, and lithium cobalt phosphate.

Further, the lithium-rich material comprises at least one of a lithium-rich iron-based material, a lithium-rich manganese-based material, a lithium-rich nickel-based material, and a lithium-rich cobalt-based material.

Specifically, a general chemical formula of the lithium-rich iron-based material is aLiFeO₂·bLi₂O·cMₓO_{y}; in which, a, b, and c in the general chemical formula are numbers of moles and satisfy: a + b ≥ 0.98, c ≤ 0.02, and 1.8 ≤ b/a ≤ 2.1; M is one or more of Si, Ni, Co, Mn, Ti, Al, Cu, V, Zr, and Sn; and 1 ≤ y/x ≤ 2.5, where x is 1 to 3.

Further, a particle size of the lithium-rich composite material satisfies: 1 µm ≤ D50 ≤ 10 µm.

Further, a particle size of the lithium-rich composite material satisfies: 1 µm ≤ D50 ≤ 10 µm, D10/D50 ≥ 0.3, and D90/D50 ≤ 2.

Further, a BET specific surface of the lithium-rich composite material is 0.5 m²/g to 20 m²/g.

Further, a resistivity of the lithium-rich composite material is 1.0 Ω/cm to 500 Ω/cm.

In a second aspect of the present application, preparation method of a lithium-rich composite material is provided. The preparation method of a lithium-rich composite material comprises steps of:
forming a dense hydrophobic layer on a surface of a lithium-rich material by using a polyanionic electrochemically active material or a precursor material of the polyanionic electrochemically active material, whereby coating the lithium-rich material and obtaining the lithium-rich composite material; in which, the polyanionic electrochemically active material is a phosphate electrode active material.
Further, the method of forming the dense hydrophobic layer on the surface of the lithium-rich material by using the polyanionic electrochemically active material or the precursor material of the polyanionic electrochemically active material comprises the following steps:
mixing a mixture comprising a first electronic conductive agent or a precursor material of the first electronic conductive agent and a precursor material of the polyanionic electrochemically active material with the lithium-rich material, forming a first coating layer on the surface of the lithium-rich material, and obtaining a first precursor of a lithium-rich composite material; and
subjecting the first precursor of the lithium-rich composite material to a first sintering treatment in a protective atmosphere to obtain the lithium-rich composite material.
Further, the method of forming the dense hydrophobic layer on the surface of the lithium-rich material by using the polyanionic electrochemically active material or the precursor material of the polyanionic electrochemically active material comprises the following steps:
mixing the precursor material of the polyanionic electrochemically active material with the lithium-rich material, forming a second coating layer on the surface of the lithium-rich material, and obtaining a second precursor of the lithium-rich composite material;
subjecting the second precursor of the lithium-rich composite material to a second sintering treatment in a protective atmosphere, to obtain a lithium-rich composite material having an active material coating layer;
mixing a second electronic conductive agent or a precursor material of the second electronic conductive agent with the lithium-rich composite material having the active material coating layer, forming a third coating layer on a surface of the lithium-rich composite material having the active material coating layer, and obtaining a third precursor of the lithium-rich composite material; and
subjecting the third precursor of the lithium-rich composite material to a third sintering treatment in a protective atmosphere, to obtain the lithium-rich composite material.

Further, the precursor material of the polyanionic electrochemically active material comprises at least one of a lithium iron phosphate precursor, a lithium manganese phosphate precursor, a lithium manganese iron phosphate precursor, a lithium vanadium phosphate precursor, a lithium nickel phosphate precursor, and a lithium cobalt phosphate precursor.

In a third aspect of the present application, a cathode plate is provided. The cathode plate comprises a cathode current collector and a cathode active layer bonded to a surface of the cathode current collector. The cathode active layer contains the lithium-rich composite material according to embodiments of the present application, or the lithium-rich composite material prepared by the preparation method of the lithium-rich composite material according to embodiments of the present application.

In a fourth aspect, a secondary battery is provided. The secondary battery comprises a cathode plate and an anode plate. The cathode plate is the cathode plate according to embodiments of the present application.

Compared with the prior art, the present application has the following technical effects:

In the lithium-rich composite material of the present application, the dense hydrophobic layer is coated on the core containing the lithium-rich material, such that the dense hydrophobic layer is able to effectively coat the lithium-rich material contained in the core, thus isolating the core from the ambient environment, preventing, for example, water and carbon dioxide in the ambient environment from contacting with the core, ensuring the stability of the core and thereby ensuring the lithium-supplementing effect and the stability in lithium-supplementing of the lithium-rich composite material. The polyanionic electrochemically active material contained in the dense hydrophobic layer is specifically the phosphate electrode active material, such that, on the one hand, the polyanionic electrochemically active material effectively enhances the compactness of the dense hydrophobic layer and strengthens the effect of isolating the core from the ambient environment; and on the other hand, the content of the residual alkali is low at least in the dense hydrophobic layer, which endows the lithium-rich composite material of the present application with excellent processing performance. In addition, the polyanionic electrochemically active material endows the dense hydrophobic layer with high chemical stability when contacting with the electrolyte, reduces side reactions with the electrolyte, and improves the stability of the electrochemical performance of the battery.

The preparation method of the lithium-rich composite material of the embodiments of the present application can effectively prepare a lithium-rich composite material in a core-shell structure, and can make the dense hydrophobic layer contain the polyanionic electrochemically active material and thus effectively coat the core containing the lithium-rich material; and meanwhile, make the prepared lithium-rich composite material have low content of residual alkali, and ensure that the prepared lithium-rich composite material have stable electrochemical performance and excellent processing performance, and endows the prepared lithium-rich composite material with high electrochemical stability at the contact interface with the electrolyte. In addition, the preparation method of the lithium-rich composite material can ensure that the prepared lithium-rich composite material has stable structure and electrochemical performance and has high efficiency, and saves the production cost.

Since the cathode plate of the embodiments of the present application contains the lithium-rich composite material of the embodiments of the present application, the cathode active layer of the cathode plate of the present application has uniformly dispersed components, high qualified film layer, and stable chemical performance at the contact interface with the electrolyte, which endows the cathode plate of the present application with excellent electrochemical performance, improves the initial coulombic efficiency and the overall electrochemical performance of the battery.

The secondary battery of the embodiments of the present application contains the electrode plate of the embodiments of the present application, so the lithium ion battery of the present application has excellent initial coulombic efficiency, battery capacity, and cycle performance, long service life, and stable electrochemical performance.

### BRIEF DESCRIPTION OF THE DRAWINGS

In order to more clearly illustrate the specific embodiments of the present application or the technical solutions in the prior art, the following will briefly introduce the accompanying drawings that need to be used in the description of the specific embodiments or prior art. Obviously, the accompanying drawings in the following drawings are some implementations of the present application, and those skilled in the art can obtain other drawings based on these drawings without creative work.
FIG. 1 is the structural schematic view of a lithium-rich composite material of embodiments of the present application;
FIG. 2 is a schematic structural view of the lithium-rich composite material of embodiments of the present application shown in FIG. 1;
FIG. 3 is another schematic structural view of the lithium-rich composite material of the embodiment of the present application shown in FIG. 1;
FIG. 4 provides an SEM FIG. of lithium-rich composite material provided by Example 1;
FIG. 5 provides an SEM FIG. of lithium-rich material provided by Comparative example 1;
FIG. 6 provides an XRD FIG. of lithium-rich composite material provided by Example 1; and
FIG. 7 is an XRD pattern of the lithium-rich composite material provided by Example 5.

### DETAILED DESCRIPTION OF THE EMBODIMENTS

In order to make the technical problems, technical solutions, and beneficial effects to be solved in the present application clearer, the present application will be further described in detail below in conjunction with the embodiments. It should be understood that the specific embodiments described here are only used to explain the present application, but are not intended to limit the present application.

In the present application, the term "and/or" describes the association relationship of associated objects, indicating that there may be three relationships, for example, A and/or B, which may mean the following conditions: A exists alone, A and B exist simultaneously, and B exists alone. Among them, A and B can be singular or plural. The character "/" generally indicates that the contextual objects have an "or" relationship.

In the present application, "at least one" means one or more, and "multiple" means two or more. "At least one of the following" or similar expressions refers to any combination of these items, including any combination of single or plural items. For example, "at least one of a, b, or c", or "at least one of a, b, and c" can mean: a, b, c, a-b (that is, a and b), a-c, b-c, or a-b-c, in which, a, b, and c can be singular or plural.

It should be understood that in various embodiments of the present application, the sequence numbers of the above-mentioned processes do not mean the order of execution, and some or all steps may be executed in parallel or sequentially, and the execution order of each process shall be determined based on its functions and internal logic and should not constitute any limitation to the implementation process of the embodiments of the present application.

Terms used in the embodiments of the present application are only for the purpose of describing specific embodiments, and are not intended to limit the present application. The singular forms "a", "said" and "the" used in the embodiments of the present application and the appended claims are also intended to include plural forms unless otherwise clearly indicated in the context.

The masses of the relevant components mentioned of the embodiments of the present application in the specification can not only refer to the specific contents of the component, but also represent the proportional relationship between the masses of the different components. The scaling up or down of the content of the fraction is within the scope disclosed the embodiments of the present application in the specification. Specifically, the mass described the embodiments of the present application in the specification may be µg, mg, g, kg and other well-known mass units in the chemical industry.

The terms "first" and "second" are only used for descriptive purposes to distinguish objects such as substances from each other, and cannot be understood as indicating or implying relative importance or implicitly specifying the quantity of indicated technical features. For example, without departing from the scope of the embodiments of the present application, the first XX can also be called the second XX, and similarly, the second XX can also be called the first XX. Thus, a feature defined as "first" and "second" may explicitly or implicitly include one or more of these features.

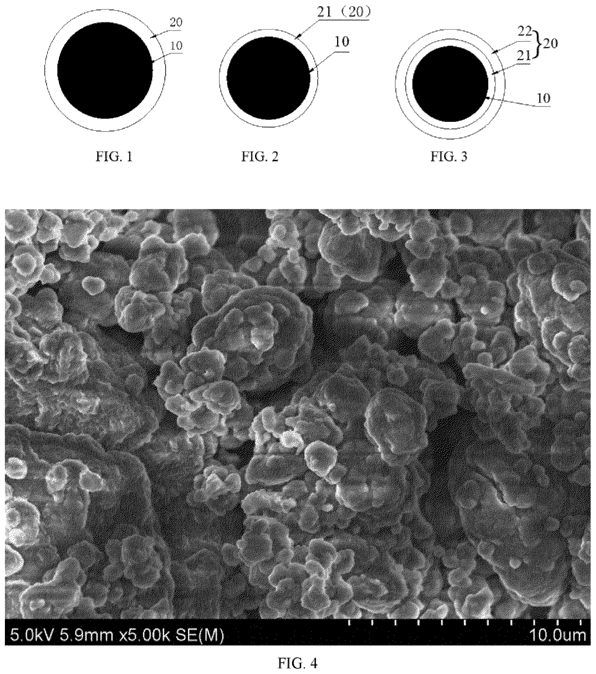

In a first aspect, embodiments of the present application provide a lithium-rich composite material. The lithium-rich composite material of the embodiments of the present application includes a core and a dense hydrophobic layer coated on the core, that is, the lithium-rich composite material of the embodiments of the present application has a core-shell structure, as in the embodiments, the lithium-rich composite material of the embodiments of the present application has a structure as shown in FIGS. 1-5, including a core 10 and a dense hydrophobic layer 20 coated on the core 10.

The core 10 includes a lithium-rich material, that is, in the lithium-rich composite material of the embodiments of the present application, the core 10 is a lithium source for providing lithium ions. Since the core 10 is rich in lithium, it is ensured that the lithium-rich composite material of the embodiments of the present application can provide abundant lithium.

Moreover, the lithium-rich material contained in the core 10 may be a conventional lithium-supplementing material, or a newly developed lithium-supplementing material. Based on the role of the lithium-rich composite material in the embodiments of the present application, in an embodiment, the lithium-rich material contained in the core 10 may be a ternary lithium-supplementing material or a binary lithium-supplementing material. For example, the lithium-rich material may comprise at least one of a lithium-rich iron-based material, a lithium-rich manganese-based material, a lithium-rich nickel-based material, and a lithium-rich cobalt-based material. For example, when the lithium-rich material is the lithium-rich iron-based material, the general chemical formula of the lithium-rich iron-based material may be aLiFeO₂·bLi₂O·cMₓO_{y}. The a, b, and c in the general chemical formula are numbers of moles and satisfy: a + b ≥ 0.98, c ≤ 0.02, and 1.8 ≤ b/a ≤ 2.1; M is one or more of Si, Ni, Co, Mn, Ti, Al, Cu, V, Zr, and Sn; and 1 ≤ y/x ≤ 2.5, in which, x is 1 to 3. Therefore, in a specific embodiment, the lithium-rich iron-based material may be LiFeO₂·1.99Li₂O,
LiFeO₂·1.99Li₂O·0.005Al₂O₃, etc. These lithium-rich ion-based materials are rich in lithium and can efficiently provide lithium ions.

In an embodiment, the core 10 may be at least one of a primary particle and a secondary particle, specifically, the at least one of the primary particle and the secondary particle is formed by the lithium-rich material contained in the core 10. In an embodiment, a particle size of the core 10 may be 0.5 µm to 20 µm. For example, when the core 10 is the primary particle, the particle size of the primary particle, that is, a particle size distribution of the core 10, is 0.5 µm to 15 µm; and when the core 10 is the secondary particle, the particle size of the secondary particle, that is, the particle size distribution of the core 10, is 1 µm to 20 µm. The secondary particle refers to an agglomerated particle formed by aggregating more than one primary particle. By controlling the particle size and shape of the core 10, on the basis of being able to provide abundant lithium ions, the processability of the lithium-rich composite material in the preparation of lithium battery slurry is also improved. The core having relative small primary particle size may also de-intercalate more lithium ions.

In addition, although the lithium-rich material contained in the core 10 in the above embodiments is rich in lithium, the lithium-rich material is unstable when encountering water and carbon dioxide and easily reacts with water and carbon dioxide, thus resulting in reduced lithium-supplementing effect of the lithium-rich composite material in the embodiments of the present application. In addition, the lithium-rich material is generally rich in residual alkali formed in the processing, which further reduces the processing performance of the lithium-rich material, for example, a slurry containing the lithium-rich material may have sharply increased viscosity and may be quickly gelled and lose the fluidity, making the slurry unable to be subjected with subsequent processing. For example, relevant studies have shown that a main difficulty of the lithium-rich material, especially the lithium-supplementing material, lies in the control of the interface of the highly active material and the large amount of residual alkali on the surface layer, which leads to the fact that the residual alkali is easily converted into lithium hydroxide and other products in an atmosphere with a certain humidity, causing many troubles to subsequent slurry processing. Moreover, the highly active interface is very prone to complex side reactions with a carbonate solvent, resulting in unstable or reduced electrochemical performance of lithium-rich materials. Therefore, on the basis of the core 10 in the above embodiments, the dense hydrophobic layer 20 contained in the lithium-rich composite material in the above embodiments covers the core 10 to form a complete coating layer, as shown in FIG. 1. In this way, the dense hydrophobic layer 20 can effectively cover the lithium-rich material contained in the core 10, so that the core 10 is isolated from the ambient environment and prevented from contacting with, for example, the water and carbon dioxide in the ambient environment, which ensures the stability of the core 10 and therefore ensures the stability of the electrochemical performance of lithium-rich composite material.

A material of the dense hydrophobic layer 20 includes a polyanionic electrochemically active material, and the polyanionic electrochemically active material is a phosphate electrode active material. In this way, a polyanionic electrochemically active material is added in the dense hydrophobic layer 20. The existence of the polyanionic electrochemically active material enhances the compactness of the dense hydrophobic layer 20 and enhances the isolation effect of the core 10 from the ambient environment. Moreover, the polyanionic electrochemically active material can improve the conductivity of lithium ions, and is more conducive to the de-intercalation and conduction of lithium ions in the core 10. For example, when the lithium-rich material contained in the core 10 is a lithium-supplementing material, it is conducive to the de-intercalation and conduction of lithium ions contained in the lithium-rich material, thus improving the lithium-supplementing effect of the lithium-rich material. In addition, the presence of the polyanionic electrochemically active material enhances the chemical stability at the contact interface between the dense hydrophobic layer 20 and the electrolyte, for example, enhancing the chemical stability of the dense hydrophobic layer 20 in contact with the carbonate solvent, reducing or even avoiding the side reaction with the electrolyte at the contact interface, thereby enhancing the chemical stability of the lithium-rich composite material in contact with the electrolyte. Meanwhile, the existence of the polyanionic electrochemically active material also makes the content of the residual alkali in the core 10 and the dense hydrophobic layer 20 low, making the lithium-rich composite material of the embodiments of the present application have excellent processing performance. Moreover, the polyanionic electrochemically active material is selected as a phosphate electrode active material, which endows the dense hydrophobic layer 20 with excellent water resistance, low residual alkali on the surface, and is easier to be processed than ternary materials. In addition, the conductive carbon layer attached to the phosphate-based material can effectively increase the overall conductive effect of the dense hydrophobic layer 20.

Based on the above effect of the dense hydrophobic layer 20, the polyanionic electrochemically active material added in the dense hydrophobic layer 20 may have the following distributions in the dense hydrophobic layer 20:

In an embodiment, the polyanionic electrochemically active material forms a mixture with other materials, and forms a dense hydrophobic layer 20 to cover the core 10. As in the embodiment, the other material may be an electronic conductive agent, that is, the material of the dense hydrophobic layer 20 further includes an electronic conductive agent, and the electronic conductive agent and the polyanionic electrochemically active material form a mixture. The polyanionic electrochemically active material and the electronic conductive agent form the dense hydrophobic layer 20 together, so that the dense hydrophobic layer 20 has high compactness, the polyanionic electrochemically active material and the electronic conductive agent have a synergistic effect, which enhances conduction of the lithium ions while improving the electronic conductivity of the dense hydrophobic layer 20, and reduces the content of the residual alkali and enhances the chemical stability at the contact interface between the dense hydrophobic layer 20 and the electrolyte.

In a further embodiment, when the material of the dense hydrophobic layer 20 is a mixture of an electronic conductive agent and the polyanionic electrochemically active material, a mass percentage of the polyanionic electrochemically active material accounting for the mass of the lithium-rich composite material is controlled to be 0.5 wt. % to 30 wt. %, which may specifically be 0.5 wt. %, 1 wt. %, 3 wt. %, 5 wt. %, 8 wt. %, 10 wt. %, 13 wt. %, 15 wt. %, 17 wt. %, 20 wt. %, 23 wt. %, 25 wt. %, 27 wt. %, 30 wt. %, etc. In other embodiments, a mass percentage of the electronic conductive agent accounting for the mass of the polyanionic electrochemically active material is controlled to 1 wt. % to 6 wt. %, which may specifically be 1 wt. %, 2 wt. %, 3 wt. %, 4 wt. %, 5 wt. %, and 6 wt. %. By controlling a mixing ratio of the electronic conductive agent and the polyanionic electrochemically active material, the compactness of the dense hydrophobic layer 20 is further improved, the ionic conductivity and electronic conductivity of the dense hydrophobic layer 20 are enhanced, and the content of the residual alkali in the lithium-rich composite material, especially the dense hydrophobic layer 20, is further reduced, and the chemical stability at the contact interface between the dense hydrophobic layer 20 and the electrolyte is further improved.

In a specific embodiment, the electronic conductive agent may include at least one of a conductive carbon material, a conductive oxide, and a conductive organic substance. When the electronic conductive agent is the conductive carbon material, the conductive carbon material includes at least one of an amorphous carbon, a carbon nanotube, a graphite, a carbon black, a grapheme, etc. When the electronic conductive agent is the conductive oxide, the conductive oxide may include at least one of In₂O₃, ZnO, and SnOz. The conductive organic substance may be a conductive polymer, etc. These electronic conductive agents have high electronic conductivity, and together with the polyanionic electrochemically active material, improve the compactness of the dense hydrophobic layer 20 or further improve the chemical stability of the contact interface with the electrolyte and reduce the content of residual alkali.

In other embodiments, a structure of the dense hydrophobic layer 20 is as shown in FIG. 2, including an active material coating layer 21. The active material coating layer 21 covers the core 10, and a material of the active material coating layer 21 is a polyanionic electrochemically active material. That is, in the dense hydrophobic layer 20 shown in FIG. 2, the polyanionic electrochemically active material forms a coating layer, that is, the formed active material coating layer 21 covers the core 10. Further, based on the structure shown in FIG. 2, a content of the polyanionic electrochemically active material, that is, the active material coating layer 21 formed therefrom, in the lithium-rich composite material is 0.5 wt. % to 30 wt. %. By controlling the thickness of the active material coating layer 21 based on the control of the content of the active material coating layer 21, the active material coating layer 21 has high density and fully plays the above functions of the polyanionic electrochemically active material.

In a further embodiment, based on the structure of the dense hydrophobic layer 20 shown in FIG. 2, as shown in FIG 3, the dense hydrophobic layer 20 further comprises an electron conductor packaging layer 22, and the electron conductor packaging layer 22 is coated at a surface of active material coating layer 21 away from the core 10. That is, the electron conductor packaging layer 22 is coated on an outer surface of the active material coating layer 21. In this way, the active material coating layer 21 and the electron conductor packaging layer 22 together constitute a composite structure coating layer, and in such condition, the dense hydrophobic layer 20 is a composite structure. In such composite structure, on the basis that the active material coating layer 21 plays the role of the above active material coating layer 21 and the electron conductor packaging layer 22 plays the role of electronic conductivity, the compounding of the two film layers plays a synergistic effect, which further improves the compactness of the dense hydrophobic layer 20, further enhances the ionic conductivity and electronic conductivity of the dense hydrophobic layer 20 and the chemical stability at the contact interface with the electrolyte, and further reduces the content of the residual alkali in the lithium-rich composite material, especially in the dense hydrophobic layer 20.

In an embodiment, the electron conductor packaging layer 22 shown in FIG. 3 may have a thickness of 1 nm to 100 nm. In other embodiments, a material of the electron conductor packaging layer 22 may include at least one of a carbon material, a conductive oxide, and a conductive organic substance. In a specific embodiment, when the material of the electron conductor packaging layer 22 is a carbon material, the carbon material includes at least one of an amorphous carbon, a carbon nanotube, a graphite, a carbon black, a graphene, etc. When the material of the electron conductor packaging layer 22 is the conductive oxide, the conductive oxide may include at least one of In₂O₃, ZnO, and SnOz. The conductive organic substance may be a conductive polymer or the like. By adjusting the content and material of the electron conductor packaging layer 22, the above effects thereof can be further improved.

In addition, on the basis of the structures shown in FIGS. 1-3, other functional layers can be coated on an outer surface of the dense hydrophobic layer 20 shown in FIG. 1 as required, or other functional layers can be coated on an outer surface of the active material coating layer 21 shown in FIG. 2, or other functional layers can be coated on an outer surface of the electron conductor packaging layer 22 shown in FIG. 3. The types of other functional layers can be flexibly selected as required.

In an embodiment, the polyanionic electrochemically active material contained in the dense hydrophobic layer 20 in the above embodiments may include at least one of lithium iron phosphate, lithium manganese phosphate, lithium manganese iron phosphate, lithium vanadium phosphate, lithium nickel phosphate, and lithium cobalt phosphate. By controlling and selecting the types of the polyanionic electrochemically active material, the above effects of the polyanionic electrochemically active material can be improved, thereby improving the delithiation ability and ion conductivity of the lithium-rich composite material, and improving the compactness of the dense hydrophobic layer 20 and the chemical stability of the dense hydrophobic layer 20 at the contact interface with the electrolyte, reducing the content of the residual alkali, thereby improving the electrochemical performance, the stability of the electrochemical performance, and the processing performance of the lithium-rich composite material. It is known from measurements that a specific surface area of the lithium-rich composite material in the above embodiments is 0.2 m²/g to 20 m²/g, which indicates excellent compactness. The resistivity of the lithium-rich composite material is 1.0 Ω/cm to 500 Q/cm, and the electronic conductivity is high.

In addition, by controlling the particle size of the lithium-rich composite core 10 and the thickness range of the dense hydrophobic layer 20, the particle size of the lithium-rich composite material can be controlled and adjusted, such as controlling and adjusting the particle size of the lithium-rich composite material to satisfy: 1 µm ≤ D50 ≤ 10 µm; further, the particle size of the lithium-rich composite material satisfies: 1 µm ≤ D50 ≤ 10 µm, D10/D50 ≥ 0.3, and D90/D50 ≤ 2. Therefore, the particle size of the lithium-rich composite material in the above embodiments is uniform and controllable.

In a second aspect, embodiments of the present application further provide a preparation method of the above lithium-rich composite material. In the embodiments, the preparation method of the lithium-rich composite material in the embodiments of the present application includes the following steps:

forming a dense hydrophobic layer on a surface of a lithium-rich material by using a polyanionic electrochemically active material or a precursor material of the polyanionic electrochemically active material, whereby coating the lithium-rich material and obtaining the lithium-rich composite material.

The lithium-rich material used in the preparation method of the lithium-rich composite material in the embodiments of the present application is the lithium-rich material that forms the core 10 of the above lithium-rich composite material. The polyanionic electrochemically active material is also the polyanionic electrochemically active material in the dense hydrophobic layer 20 of the above lithium-rich composite material. In order to save space, the lithium-rich material and the polyanionic electrochemically active material will not be repeated here. The lithium-rich material and the polyanionic electrochemically active material can be prepared respectively according to the preparation method of the corresponding lithium-rich material.

In the preparation method of the lithium-rich composite material in the embodiments of the present application, the polyanionic electrochemically active material or the precursor material thereof is adopted to form the dense hydrophobic layer, therefore, the polyanionic electrochemically active material is contained in the formed dense hydrophobic layer, thereby generating the above dense hydrophobic layer 20 of the embodiments of the present application. In this way, the prepared lithium-rich composite material has a core-shell coating structure, and the dense hydrophobic layer formed has a high density, which enhances the isolation effect of the core from the ambient environment, and has a good effect of isolating unfavorable factors such as water and carbon dioxide in the ambient environment. Moreover, the content of the residual alkali contained in the prepared lithium-rich composite material, especially in the dense hydrophobic layer, is very low, and the prepared lithium-rich composite material has high chemical stability in contact with the electrolyte, which makes the lithium-rich composite material have excellent processing performance and reduces the side reactions with the electrolyte. In addition, the preparation method of the lithium-rich composite material can ensure that the prepared lithium-rich composite material has a stable structure and electrochemical performance and high efficiency and saves production costs.

In the above preparation method of the lithium-rich composite material in the embodiments of the present application, the method of forming the dense hydrophobic layer on the surface of the lithium-rich material by using the polyanionic electrochemically active material or the precursor material of the polyanionic electrochemically active material may adopt corresponding methods according to the types and performances of the specific polyanionic electrochemically active material or the precursor material thereof to realize the coating of the lithium-rich material and the formation of the dense hydrophobic layer. For example, the following methods may be adopted to achieve the coating of the lithium-rich material and the formation of the dense hydrophobic layer.

In an embodiment, the method of forming the dense hydrophobic layer on the surface of the lithium-rich material by using the polyanionic electrochemically active material or the precursor material of the polyanionic electrochemically active material comprises the following steps:
step S 11: mixing a mixture comprising a first electronic conductive agent or a precursor material of the first electronic conductive agent and a precursor material of the polyanionic electrochemically active material with the lithium-rich material, forming a first coating layer on the surface of the lithium-rich material, and obtaining a first precursor of a lithium-rich composite material; and
step S12: subjecting the first precursor of the lithium-rich composite material to a first sintering treatment in a protective atmosphere to obtain the lithium-rich composite material.

In step S11, after the mixture comprising the first electronic conductive agent or the precursor material of the first electronic conductive agent and the precursor material of the polyanionic electrochemically active material is mixed with the lithium-rich material, the mixture will form a coating layer on the surface of the lithium-rich material, thus the first precursor of the lithium-rich composite material is obtained. The mixing treatment may be determined according to the form of the mixture, and may be, for example, mixed coating in the liquid state, and may also be mixed coating in the solid state, etc. In addition, in the mixture, a mixing ratio of the first electronic conductive agent or the precursor material of the first electronic conductive agent to the precursor material of the polyanionic electrochemically active material can be determined according to the content of the electronic conductive agent in the dense hydrophobic layer formed. For example, the mixing ratio is controlled so that a mass of the electronic conductive agent accounts for 1 wt. % to 6 wt. % of a mass of the polyanionic electrochemically active material. Or alternatively, a mixing ratio of the mixture to the lithium-rich material is further controlled, so that a content of the polyanionic electrochemically active material in the lithium-rich composite material is 0.5 wt. % to 30 wt. %.

In a specific embodiment, the first electronic conductive agent, such as the electronic conductive agent contained in the above dense hydrophobic layer 20, may include at least one of a conductive carbon material and a conductive oxide. Then the precursor material of the first electronic conductive agent is also a precursor material corresponding to the first electronic conductive agent. Similarly, the precursor material of the polyanionic electrochemically active material is also the precursor material corresponding to the above polyanionic electrochemically active material. For example, when the polyanionic electrochemically active material is lithium iron phosphate, the precursor material of the polyanionic electrochemically active material is a precursor for forming lithium iron phosphate, and includes a mixture of a lithium source, an iron source, and a phosphorus source.

The first sintering treatment in step S12 is to sinter the precursor material of the polyanionic electrochemically active material or a precursor of the first electronic conductive agent to form a mixture of the polyanionic electrochemically active material and the first electronic conductive agent, and to form a dense hydrophobic layer on the surface of the lithium-rich material in situ. The condition of the first sintering treatment can be determined according to the sintering conditions of the precursor material of the polyanionic electrochemically active material or the precursor of the first electronic conductive agent, for example, when the precursor material of the polyanionic electrochemically active material is a lithium iron phosphate precursor and the precursor of the first electronic conductive agent is an organic substance, the first sintering treatment may be heating to a temperature of 450°C to 900°C at a heating rate of 100°C/hr to 500°C/hr in a non-oxidizing atmosphere, and keeping the resulting temperature for 0.5 hrs to 10 hrs.

The protective atmosphere in step S12 may be a chemically inert atmosphere formed by nitrogen and/or argon.

It can be understood that the first electronic conductive agent or the precursor material of the first electronic conductive agent and the polyanionic electrochemically active material or the precursor material thereof may also be directly utilized to be deposited in situ on the surface of the lithium-rich material by vapor deposition to form the dense hydrophobic layer containing a mixture of the polyanionic electrochemically active material and the first electronic conductive agent.

In another embodiment, the method of forming the dense hydrophobic layer on the surface of the lithium-rich material by using the polyanionic electrochemically active material or the precursor material of the polyanionic electrochemically active material comprises the following steps:
S21: mixing the precursor material of the polyanionic electrochemically active material with the lithium-rich material, forming a second coating layer on the surface of the lithium-rich material, and obtaining a second precursor of the lithium-rich composite material;
S22: subjecting the second precursor of the lithium-rich composite material to a second sintering treatment in a protective atmosphere, to obtain a lithium-rich composite material having an active material coating layer;
S23: mixing a second electronic conductive agent or a precursor material of the second electronic conductive agent with the lithium-rich composite material having the active material coating layer, forming a third coating layer on a surface of the lithium-rich composite material having the active material coating layer, and obtaining a third precursor of the lithium-rich composite material; and
S24: subjecting the third precursor of the lithium-rich composite material to a third sintering treatment in a protective atmosphere, to obtain the lithium-rich composite material.

After the mixing treatment in step S21, the precursor material of the polyanionic electrochemically active material will form a coating layer on the surface of the lithium-rich material to obtain a second precursor of the lithium-rich composite material. The mixing treatment can be determined according to the form of the precursor material of the polyanionic electrochemically active material, and may be, for example, mixed coating in the liquid state, and may also be mixed coating in the solid state. In addition, in this mixing process, the mixing ratio of the lithium-rich material to the precursor material of the polyanionic electrochemically active material can be determined according to the content of the active material coating layer, for example, the mixing ratio is controlled to enable a content of the polyanionic electrochemically active material, that is, the active material coating layer, to account for 0.5 wt. % to 30 wt. % of the lithium-rich composite material.

In step S22, during the second sintering process, the precursor material of the polyanionic electrochemically active material is sintered to form the polyanionic electrochemically active material, and a coating layer of the polyanionic electrochemically active material is formed to coat the surface of the lithium-rich material in situ, that is, the active material coating layer is formed to cover the surface of the lithium-rich material. The active material coating layer is the active material coating layer 21 contained in the lithium-rich material shown in FIG. 2 and FIG. 3. Therefore, the second sintering treatment can be determined according to the types of the precursor material of the polyanionic electrochemically active material. For example, when the precursor material of the polyanionic electrochemically active material is a lithium iron phosphate precursor, the second sintering treatment may be heating to a temperature of 450°C to 900°C at a heating rate of 100°C/hr to 500°C/hr in a non-oxidizing atmosphere, and keeping the resulting temperature for 0.5 hrs to 10 hrs. The protective atmosphere in step S22 may be a chemically inert atmosphere formed by nitrogen and/or argon.

In step S23, the second electronic conductive agent or the precursor material of the second electronic conductive agent is mixed with the lithium-rich composite material having the active material coating layer prepared in step S22 to form a coating layer of the second electronic conductive agent or a precursor material of the second electronic conductive agent on the outer surface of the active material coating layer, thus obtaining the precursor of the third lithium-rich composite material. The mixing process in step S23 can also be determined according to the form of the second electronic conductive agent or the precursor material of the second electronic conductive agent, and may be, for example, mixed coating in the liquid state, and may also be mixed coating in the solid state. In addition, the mixing ratio of the second electronic conductive agent or the precursor material of the second electronic conductive agent to the lithium-rich composite material having the active material coating layer can be determined according to the content of the second electronic conductive agent in the formed dense hydrophobic layer, for example, the mixing ratio is controlled to enable a mass of the second electronic conductive agent to account for 1 wt. % to 6 wt. % of a mass of the polyanionic electrochemically active material, that is, the active material coating layer.

In step S24, during the third sintering process, when the precursor material of the second electronic conductive agent is adopted, the precursor material of the second electronic conductive agent is sintered and decomposed to form the electronic conductive coating layer on the surface of the active material coating layer in situ; and when the second electronic conductive agent is adopted, the second electronic conductive agent is sintered to form the electronic conductive coating layer. The electronic conductive coating layer coated on the active material coating layer is the electron conductor packaging layer 22 contained in the lithium-rich material shown in FIG. 3. The electronic conductive coating layer and the active material coating layer formed in step S23 constitute a dense hydrophobic layer in a composite structure, such as the dense hydrophobic layer 20 contained in the lithium-rich material as shown in FIG. 3. The protective atmosphere in step S24 may be a chemically inert atmosphere formed by nitrogen and/or argon.

Therefore, the third sintering treatment may be carried out according to the conditions for sintering and decomposition of the precursor material of the second electron conducting agent or the conditions for sintering the second electron conducting agent. For example, when the second electronic conductive agent precursor is a carbon source, the third sintering treatment may be heating to a temperature of 450°C to 900°C at a heating rate of 100°C/hr to 500°C/hr in a non-oxidizing atmosphere, and keeping the resulting temperature for 0.5 hrs to 10 hrs.

It can be understood that when the dense hydrophobic layer in the composite structure as shown in FIG. 3 is formed step by step, in addition to that the precursor material of the polyanionic electrochemically active material is mixed with and coated on the lithium-rich material in the above step S21 and then sintered to form the active material coating layer, other methods, such as chemical deposition, may also be used to directly deposit the precursor material of the polyanionic electrochemically active material on the surface of the lithium-rich material in situ to form the active material coating layer. It is also possible to directly use the polyanionic electrochemically active material to form an active material coating layer on the surface of the lithium-rich material by other methods, such as vapor deposition or magnetron sputtering.

Similarly, other methods such as chemical deposition can also be used to directly deposit the precursor material of the second electronic conductive agent on the surface of the active material coating layer in situ to form the electronic conductive coating layer. It is also possible to directly use the second electronic conductive agent to form an electronic conductive coating layer on the electronic conductive coating layer by other methods, such as vapor deposition or magnetron sputtering.

Therefore, in the above preparation method of the lithium-rich composite material, the dense hydrophobic layer covering the lithium-rich material can be formed on the surface of the lithium-rich material, so as to form the above lithium-rich composite material in a core-shell structure, in this way, the prepared lithium-rich composite material has stable electrochemical performance and high electrochemical stability at the contact interface with the electrolyte. Moreover, the lithium-rich composite material contains low content of residual alkali and has excellent processing performance.

In a third aspect, the embodiments of the present application further provide a cathode plate. The cathode plate of the embodiments of the present application includes a cathode current collector and a cathode active layer bonded to a surface of the cathode current collector. The cathode active layer contains the lithium-rich composite material according to the above embodiments of the present application. In the cathode plate of the embodiments of the present application, the lithium-rich composite material can be used as a cathode material or as a cathode lithium-supplementing additive. Since the cathode plate of the embodiments of the present application contains the lithium-rich composite material of the above embodiments of the present application, the components contained in the cathode active layer of the cathode plate of the embodiments of the present application are uniformly dispersed, and the quality of the film layer is high. Moreover, the cathode plate has stable chemical performance at the contact interface with the electrolyte, endowing the electrode plate with excellent electrochemical performance, and improving the initial coulombic efficiency and overall electrochemical performance of the battery.

In an embodiment, the mass content of the lithium-rich composite material of above embodiments of the present application contained in the cathode active layer may be 0.5 wt. % to 10 wt. %. The cathode active layer includes, in addition to the lithium-rich composite material, a binder and a conductive agent. A content of the binder may be 0.5 wt. %to 20 wt. %, and the binder may be a commonly used electrode binder, which comprises one or more of, for example, a polyvinylidene chloride, a soluble polytetrafluoroethylene, a styrenebutadiene rubber, a hydroxypropyl methylcellulose, a methylcellulose, a carboxymethylcellulose, a polyvinyl alcohol, an acrylonitrile copolymer, a sodium alginate, a chitosan, and a chitosan derivative. A content of the conductive agent may be 0.2 wt. % to 20 wt. %, and the conductive agent may also be a commonly used conductive agent, which comprises one or more of, for example, a graphite, a carbon black, an acetylene black, a graphene, a carbon fiber, a C60, and a carbon nanotube. When the lithium-rich composite material is used as a cathode lithium-supplementing additive, the lithium-rich composite material further contains a cathode active material. The cathode active material may include one or more of lithium cobaltate, lithium manganate, lithium iron phosphate, lithium vanadium phosphate, lithium vanadium oxyphosphate, lithium fluorovanadium phosphate, lithium titanate, lithium nickel cobalt manganate, and lithium nickel cobalt aluminate.

In an embodiment, the preparation process of the cathode plate may be as follows: the cathode lithium-supplementing additive, the conductive agent, and the binder may be optionally further mixed with the cathode active material to obtain a cathode slurry, the cathode slurry is coated on the cathode current collector, then subjected with drying, roll pressing, die-cutting, and other steps to prepare the cathode plate.

In a fourth aspect, the embodiments of the present application further provide a secondary battery. The secondary battery of the embodiments of the present application includes necessary components, such as a cathode plate, an anode plate, a separator, and an electrolyte, as well as other necessary or auxiliary components. The cathode plate is the cathode plate of the above embodiments of the present application, that is, the cathode active layer contained in the cathode plate contains the lithium-rich composite material of above embodiments of the present application.

Since the secondary battery of the embodiments of the present application contains the lithium-rich composite material of above embodiments of the present application, based on that the lithium-rich composite material of above embodiments of the present application has excellent lithium-supplementing performance or further has ion conductivity and/or electron conductivity, the secondary battery of the embodiments of the present application has excellent initial coulombic efficiency, battery capacity, and cycle performance, long service life, and stable electrochemical performance.

A number of specific examples are used to illustrate the lithium-rich composite material of the present application, the preparation method and application thereof.

### 1. Examples of lithium-rich composite materials and preparation methods thereof:

### Example 1

This example provides a lithium-rich composite material and a preparation method thereof. The lithium-rich composite material includes a LiFeO₂·1.99Li₂O core and a dense hydrophobic layer coated on the core, and a material of the dense hydrophobic layer is a composite of lithium iron phosphate (LFP) and carbon.

The preparation method of the lithium-rich composite material in this example includes the following steps:
S1. Preparation of LiFeO₂·1.99Li₂O:
   Fe(NO₃)₃·9H₂O and LiNO₃ at a molar ratio of 1:4.98 were fully mixed in an aqueous solution, spray dried at 280°C and then crushed; heated up to a temperature of 850°C at a heating rate of 300°C/hr in an air atmosphere, and kept at such temperature for 15 hrs. After being cooled, a resulting product was mechanically crushed and classified to obtain a LiFeO₂·1.99Li₂O powder as the core.
S2. Preparation of the composite material of LFP and carbon as the dense hydrophobic layer:
   Citric acid, Fe(NO₃)₃·9H₂O, LiNO₃, and ammonium dihydrogen phosphate with a molar ratio of 1:1:1:1 were fully mixed in an aqueous solution, then subjected to dry heating treatment at 300°C for 4 hrs, and added to the LiFeO₂·1.99Li₂O powder with a mass of 15 wt. % of the LiFeO₂·1.99Li₂O powder, a resulting mixture was ball milled and mixed uniformly. After that, the resulting mixture was transferred to a rotary furnace and introduced with N₂ for protection, heated to a temperature of 650°C at a heating rate of 200°C/hr and kept at such temperature for 4 hrs, then cooled down to obtain the lithium-rich composite material, in which, the core was LiFeO₂·1.99Li₂O, the coating layer was a dense hydrophobic layer, and a material of the dense hydrophobic layer was a composite of lithium iron phosphate (LFP) and carbon.

It is known from measurements that the mass of LFP is 3.9 wt. % of the total mass of the lithium-rich composite material, and the mass of carbon is 15 wt. % of the mass of LFP; an average particle size of the LiFeO₂·1.99Li₂O core is 8 µm, and a thickness of the dense hydrophobic layer is 35 nm. A BET specific surface area is 4.1 m²/g, and the measured resistivity is lower than 450 Ω·cm at 25°C.

### Example 2

This example provides a lithium-rich composite material and a preparation method thereof. The lithium-rich composite material includes a LiFeO₂·1.99Li₂O·0.005Al₂O₃ core and a dense hydrophobic layer coated on the core, and a material of the dense hydrophobic layer is a composite of lithium manganese iron phosphate (LMFP) and carbon.

The preparation method of the lithium-rich composite material in this example includes the following steps:
S1. Preparation of LiFeO₂·1.99Li₂O·0.005Al₂O₃:
   Fe(NO₃)₃·9H₂O, LiNO₃, and Al(NO₃)₃ at a molar ratio of 1:4.98:0.01 were added to a 15 wt. % citric acid aqueous solution and fully mixed, spray dried at 280°C and crushed to obtain a
   LiFeO₂·1.99Li₂O·0.005Al₂O₃ powder.
S2. Preparation of the composite material of LMFP and carbon as the dense hydrophobic layer:
   Citric acid, Fe(NO₃)₃·9H₂O, Mn(NO₃)₂, LiNO₃, and ammonium dihydrogen phosphate with a molar ratio of 1:0.6:0.4:1:1 were fully mixed in an aqueous solution, then subjected to dry heating treatment at 300°C for 4 hrs, and added to the LiFeO₂·1.99Li₂O·0.005Al₂O₃ powder with a mass of 10 wt. % of the LiFeO₂·1.99Li₂O·0.005Al₂O₃ powder, a resulting mixture was ball milled and mixed uniformly. After that, the resulting mixture was transferred to a rotary furnace and introduced with N₂ for protection, heated to a temperature of 650°C at a heating rate of 200°C/hr and kept at such temperature for 4 hrs, then cooled down to obtain the lithium-rich composite material, in which, the core was LiFeO₂·1.99Li₂O·0.005Al₂O₃, the coating layer was a dense hydrophobic layer, and a material of the dense hydrophobic layer was a composite of lithium manganese iron phosphate (LMFP) and carbon.

It is known from measurements that the mass of LMFP is 3 wt. % of the total mass of the lithium-rich composite material, and the mass of carbon is 12 wt. % of the mass of LMFP; an average particle size of the LiFeO₂·1.99Li₂O·0.005Al₂O₃ core is 12 µm, and a thickness of the dense hydrophobic layer is 80 nm. A BET specific surface area is 7.3 m²/g, and the measured resistivity is lower than 390 Ω·cm at 25°C.

### Example 3

This example provides a lithium-rich composite material and a preparation method thereof. The lithium-rich composite material includes a LiFeO₂·2.025Li₂O·0.01CuO core and a dense hydrophobic layer coated on the core, and a material of the dense hydrophobic layer is a composite of lithium vanadium phosphate (LVP) and carbon.

The preparation method of the lithium-rich composite material in this example includes the following steps:
S1. Preparation of LiFeO₂·1.99Li₂O:
   Fe(NO₃)₃, LiOH, and CuO at a molar ratio of 1: 10.1: 0.01 were fully mixed; heated up to a temperature of 900°C at a heating rate of 300°C/hr in a nitrogen atmosphere, and kept at such temperature for 20 hrs. After being cooled, a resulting product was mechanically crushed and classified to obtain a LiFeO₂·2.025Li₂O·0.01CuO powder as the core.
S2. Preparation of the composite material of LVP and carbon as the dense hydrophobic layer:
   PVP, NH₄VO₃, LiNO₃, and ammonium dihydrogen phosphate with a molar ratio of 1: 2: 3: 3 were fully mixed in an aqueous solution, then subjected to dry heating treatment at 300°C for 4 hrs, and added to the LiFeO₂·2.025Li₂O·0.01CuO powder with amass of 20 wt. % of the LiFeO₂·2.025Li₂O·0.01CuO powder, a resulting mixture was ball milled and mixed uniformly. After that, the resulting mixture was transferred to a rotary furnace and introduced with N₂ for protection, heated to a temperature of 750°C at a heating rate of 200°C/hr and kept at such temperature for 4 hrs, then cooled down to obtain the lithium-rich composite material, in which, the core was LiFeO₂·2.025Li₂O·0.01CuO, the coating layer was a dense hydrophobic layer, and a material of the dense hydrophobic layer was a composite of lithium vanadium phosphate (LVP) and carbon.

It is known from measurements that the mass of LVP is 13 wt. % of the total mass of the lithium-rich composite material, and the mass of carbon is 4 wt. % of the mass of LVP; an average particle size of the LiFeO₂·2.025Li₂O·0.01CuO core is 7.3 µm, and a thickness of the dense hydrophobic layer is 130 nm. A BET specific surface area is 5.9 m²/g, and the measured resistivity is lower than 230 Ω·cm at 25°C.

### Example 4

This example provides a lithium-rich composite material and a preparation method thereof. The lithium-rich composite material includes a LiFeO₂·1.99Li₂O·0.005Al₂O3 core and a dense hydrophobic layer coated on the core, and a material of the dense hydrophobic layer is a composite of lithium manganese phosphate (LMFP) and carbon.

The preparation method of the lithium-rich composite material in this example includes the following steps:
S1. Preparation of LiFeO₂·1.99Li₂O·0.005Al₂O₃:
   Fe(NO₃)₃·9H₂O, LiNO₃, and Al(NO₃)₃ at a molar ratio of 1: 4.98: 0.01 were added to an aqueous solution and fully mixed, spray dried at 280°C and then crushed; heated up to a temperature of 850°C at a heating rate of 300°C/hr in an air atmosphere, and kept at such temperature for 15 hrs. After being cooled, a resulting product was mechanically crushed and classified to obtain a LiFeO₂·1.99Li₂O·0.005Al₂O₃ powder as the core.
S2. Preparation of the composite material of LMP and carbon as the dense hydrophobic layer:
   polyethylene glycol, Mn(NO₃)₂, LiNO₃, and ammonium dihydrogen phosphate with a molar ratio of 0.5: 1: 1: 1 were fully mixed in an aqueous solution, then subjected to dry heating treatment at 300°C for 4 hrs, and added to the LiFeO₂·1.99Li₂O·0.005Al₂O₃ powder with a mass of 20 wt. % of the LiFeO₂·1.99Li₂O·0.005Al₂O3 powder, a resulting mixture was ball milled and mixed uniformly. After that, the resulting mixture was transferred to a rotary furnace and introduced with N₂ for protection, heated to a temperature of 750°C at a heating rate of 200°C/hr and kept at such temperature for 4 hrs, then cooled down to obtain the lithium-rich composite material, in which, the core was LiFeO₂·1.99Li₂O·0.005Al₂O₃, the coating layer was a dense hydrophobic layer, and a material of the dense hydrophobic layer was a composite of LMP and carbon.

It is known from measurements that the mass of LMP is 12 wt. % of the total mass of the lithium-rich composite material, and the mass of carbon is 5 wt. % of the mass of LMP; an average particle size of the LiFeO₂·1.99Li₂O·0.005Al₂O₃ core is 5.2 µm, and a thickness of the dense hydrophobic layer is 75 nm. A BET specific surface area is 11 m²/g, and the measured resistivity is lower than 295 Ω·cm at 25°C.

### Example 5

This example provides a lithium-rich composite material and a preparation method thereof. The lithium-rich composite material includes a LiFeO₂·2.025Li₂O·0.01CuO core and a dense hydrophobic layer coated on the core, and a material of the dense hydrophobic layer is a composite of lithium iron phosphate (LFP) and carbon.

The preparation method of the lithium-rich composite material in this example includes the following steps:
S1. Preparation of LiFeO₂·2.025Li₂O·0.01CuO:
   Fe₂O₃, LiOH, and CuO at a molar ratio of 1: 10.1: 0.01 were fully mixed, then heated up to a temperature of 900°C at a heating rate of 300°C/hr in a nitrogen atmosphere, and kept at such temperature for 20 hrs. After being cooled, a resulting product was mechanically crushed and classified to obtain a LiFeO₂·2.025Li₂O·0.01CuO powder as the core.
S2. Preparation of the composite material of LFP and carbon as the dense hydrophobic layer:
   Citric acid, Fe(NO₃)₃·9H₂O, LiNO₃, and ammonium dihydrogen phosphate with a molar ratio of 0.2:1:1:1 were fully mixed in an aqueous solution, then subjected to dry heating treatment at 300°C for 4 hrs, and added to the LiFeO₂·2.025Li₂O·0.01CuO powder with amass of 30 wt. % of the LiFeO₂·2.025Li₂O·0.01CuO powder, a resulting mixture was ball milled and mixed uniformly. After that, the resulting mixture was transferred to a rotary furnace and introduced with N₂ for protection, and introduced with 1 L/min acetone and 20 L/min N₂, heated to a temperature of 700°C at a heating rate of 200°C/hr and kept at such temperature for 4 hrs, then cooled down to obtain the lithium-rich composite material, in which, the core was LiFeO₂·2.025Li₂O·0.01CuO, the coating layer was a dense hydrophobic layer, and a material of the dense hydrophobic layer was a composite of LFP and carbon.

It is known from measurements that a mass of LFP is 15 wt. % of a total mass of the lithium-rich composite material, and a mass of carbon is 3.0 wt. % of the mass of LFP; an average particle size of theLiFeO₂·2.025Li₂O·0.01CuO core is 9.2 µm, and a thickness of the dense hydrophobic layer is 130 nm. A BET specific surface area is 2.5 m²/g, and the measured resistivity is lower than 430 Ω·cm at 25°C.

### Example 6

This example provides a lithium-rich composite material and a preparation method thereof. The lithium-rich composite material includes a LiFeO₂·2.025Li₂O·0.01MnO core and a dense hydrophobic layer coated on the core, and a material of the dense hydrophobic layer is a composite of lithium manganese iron phosphate (LMFP) and carbon.

The preparation method of the lithium-rich composite material in this example includes the following steps:
S1. Preparation of LiFeO₂·2.025Li₂O·0.01MnO:
   Fe(NO₃)₃, LiOH, and MnOz at a molar ratio of 1: 10.1: 0.01 were fully mixed; heated up to a temperature of 900°C at a heating rate of 300°C/hr in a nitrogen atmosphere, and kept at such temperature for 20 hrs. After being cooled, a resulting product was mechanically crushed and classified to obtain a LiFeO₂·2.025Li₂O·0.01MnO powder as the core.
S2. Preparation of the composite material of LMFP and carbon as the dense hydrophobic layer:
   Citric acid, Fe(NO₃)₃·9H₂O, Mn(NO₃)₂, LiNO₃, and ammonium dihydrogen phosphate with a molar ratio of 0.2:0.6:0.4:1:1 were fully mixed in an aqueous solution, then subjected to dry heating treatment at 300°C for 4 hrs, and added to the LiFeO₂·1.99Li₂O·0.01MnO₂ powder with a mass of 7 wt. % of the LiFeO₂·1.99Li₂O·0.01MnO₂ powder, a resulting mixture was ball milled and mixed uniformly. After that, the resulting mixture was transferred to a rotary furnace and introduced with N₂ for protection, introduced with 1 L/min ethanol and 20 L/min N₂, heated to a temperature of 650°C at a heating rate of 200°C/hr and kept at such temperature for 4 hrs, then cooled down to obtain the lithium-rich composite material, in which, the core was LiFeO₂·2.025Li₂O·0.01MnO, the coating layer was a dense hydrophobic layer, and a material of the dense hydrophobic layer was a composite of LMFP and carbon.

It is known from measurements that the mass of LMFP is 4.6 wt. % of the total mass of the lithium-rich composite material, and a mass of carbon is 3.1 wt. % of the mass of LMFP; an average particle size of the LiFeO₂·2.025Li₂O·0.01MnO core is 3.9 µm, and a thickness of the dense hydrophobic layer is 45 nm. A BET specific surface area is 5.9 m²/g, and the measured resistivity is lower than 420 Ω·cm at 25°C.

### Example 7

This example provides a lithium-rich composite material and a preparation method thereof. The lithium-rich composite material includes a LiFeO₂·2.025Li₂O·0.01MnO core and a dense hydrophobic layer coated on the core, and a material of the dense hydrophobic layer is a composite of lithium manganese iron phosphate (LMFP) and carbon.

The preparation method of the lithium-rich composite material in this example includes the following steps:
S1. Preparation of LiFeO₂·2.025Li₂O·0.01MnO:
   Fe(NO₃)₃, LiOH, and MnOz at a molar ratio of 1: 10.1: 0.01 were fully mixed; heated up to a temperature of 900°C at a heating rate of 300°C/hr in a nitrogen atmosphere, and kept at such temperature for 20 hrs. After being cooled, a resulting product was mechanically crushed and classified to obtain a LiFeO₂·2.025Li₂O·0.01MnO powder as the core.
S2. Preparation of an LMFP dense hydrophobic layer:
   Fe(NO₃)₃·9H₂O, Mn(NO₃)₂, LiNO₃, and ammonium dihydrogen phosphate with a molar ratio of 0.6:0.4:1:1 were fully mixed in an aqueous solution, then subjected to dry heating treatment at 300°C for 4 hrs, and added to the LiFeO₂·1.99Li₂O·0.01MnO₂ powder with a mass of 7 wt. % of the LiFeO₂·1.99Li₂O·0.01MnO₂ powder, a resulting mixture was ball milled and mixed uniformly. After that, the resulting mixture was transferred to a rotary furnace and introduced with N₂ for protection, introduced with 1 L/min methanol and 20 L/min N₂, heated to a temperature of 650°C at a heating rate of 200°C/hr and kept at such temperature for 4 hrs, then cooled down to obtain the lithium-rich composite material, in which, the core was LiFeO₂·2.025Li₂O·0.01MnO, the coating layer was the LMFP dense hydrophobic layer, and a material of the dense hydrophobic layer was LMFP.
S3. Preparation of the carbon dense hydrophobic layer:
   The composite material prepared in step S2 was fully mixed with a citric acid solution, then subjected to dry heating treatment at 300°C for 4 hrs, and added to the LiFeO₂·1.99Li₂O·0.01MnO₂ powder with a mass of 7 wt. % of the LiFeOz . 1.99Li₂O·0.01MnO₂ powder, a resulting mixture was ball milled and mixed uniformly. After that, the resulting mixture was transferred to a rotary furnace and introduced with N₂ for protection, introduced with 1 L/min ethanol and 20 L/min N₂, heated to a temperature of 650°C at a heating rate of 200°C/hr and kept at such temperature for 4 hrs, then cooled down to obtain the lithium-rich composite material, in which, the core was LiFeO₂·2.025Li₂O·0.01MnO, the composite dense hydrophobic layer has a first coting layer of LMFP and a second coating layer of carbon.

### Comparative example 1

This comparative example provides a lithium-rich material and a preparation method thereof. The lithium-rich material of this comparative example is LiFeO₂·1.99Li₂O. Compared with Example 1, a difference is that the lithium-rich material of this comparative example does not contain the composite of LFP and carbon as the dense hydrophobic layer.

### Comparative example 2

This comparative example provides a lithium-rich material and a preparation method thereof. The lithium-rich material of this comparative example is LiFeO_{2·}2.025Li₂O·0.01CuO. Compared with Example 3, the difference lies in that the lithium-rich material of this comparative example does not contain the composite of LVP and carbon as the dense hydrophobic layer

### Comparative example 3

This comparative example provides a lithium-rich composite material and a preparation method thereof. The lithium-rich composite material of this comparative example includes LiFeO₂·1.99Li₂O core and a dense hydrophobic layer of a carbon material covering the core. Compared with Example 1, the difference is that the dense hydrophobic layer of the lithium-rich material of this comparative example does not contain LFP but only contains the carbon material as the dense hydrophobic layer, and the thickness of the dense hydrophobic layer of the carbon material of the lithium-rich composite material in this comparative example is basically equal to the thickness of the dense hydrophobic layer of the lithium-rich composite material in Example 1.

### Comparative example 4

This comparative example provides a lithium-rich composite material and a preparation method thereof. The lithium-rich composite material of this comparative example includes a LiFeO₂·1.99Li₂O core and a dense hydrophobic layer of a ternary material covering the core. Compared with Example 1, the difference is that the dense hydrophobic layer material of the lithium-rich composite material of this comparative example is replaced by a dense hydrophobic layer formed by a ternary material, and the thickness of the dense hydrophobic layer of the ternary material of the lithium-rich composite material in this comparative example is basically equal to the thickness of the dense hydrophobic layer of the lithium-rich composite material in Example 1.

### 2. Examples of Lithium-ion batteries

The lithium-rich composite materials provided by the above Examples 1-7 and the lithium-rich materials provided by the Comparative examples were assembled into cathodes and lithium-ion batteries according to the following methods:

Cathode: under the same conditions, LFP, a lithium-supplementing additive, a polyvinylidene fluoride, and SP-Li were mixed and ball-milled at a mass ratio of 90:5:2:3 to obtain a cathode slurry, and the cathode slurry was coated on a surface of an aluminum foil, which was then rolled and dried overnight at 110°C in vacuum to obtain a cathode plate; in which, the lithium-supplementing additive was the lithium-rich composite material provided by each of the above Examples 1-7 and lithium-rich material provided by each of Comparative Examples 1-3.

### Anode: lithium metal plate;

Electrolyte: ethylene carbonate and ethyl methyl carbonate were mixed at a volume ratio of 3:7, and added with LiPF₆ to form an electrolyte, in which, the concentration of LiPF₆ was 1 mol/L;

Separator: polypropylene microporous separator; and

Lithium-ion battery assembly: a structure of lithium metal plate-separator-electrolyte-cathode plate was assembled into a lithium-ion battery in a glove box in an inert atmosphere.

### 3. Related performance test

### 1. Relevant tests of lithium-rich composite materials

### 1.1 Scanning electron microscope analysis (SEM) of lithium-rich composite materials:

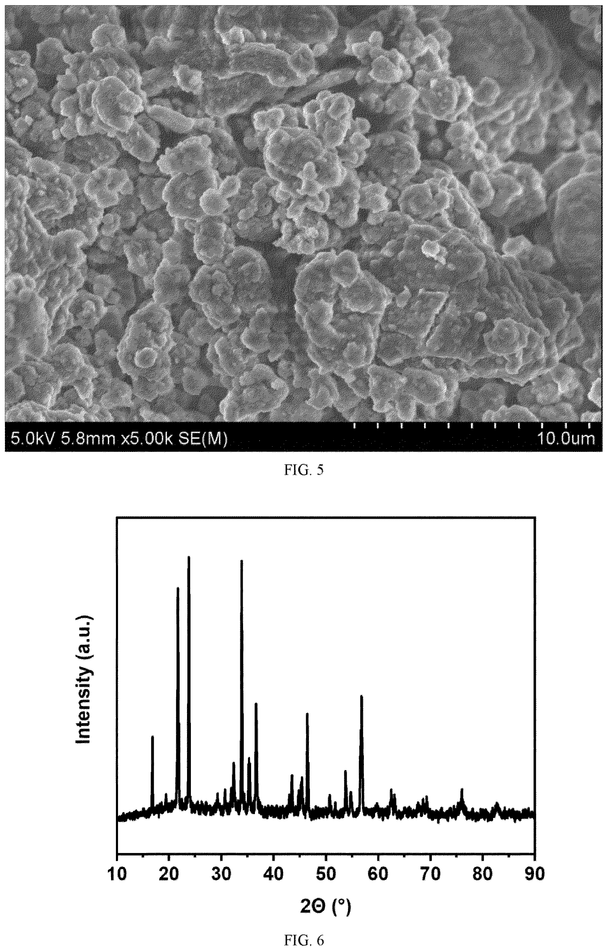

The lithium-rich composite materials provided in the above Examples 1-7 and the lithium-rich materials provided in the Comparative examples were analyzed by scanning electron microscopy. The SEM photo of the lithium-rich composite materials provided in Example 1 is shown in FIG. 4. The SEM photos of the lithium-rich material provided in Comparative example 1 is shown in FIG. 5. The SEM photos of the lithium-rich composite materials provided in other examples are similar to those shown in FIG. 4.

It can be seen from the SEM photos that the lithium-rich iron-based composite material with a coating structure in the form of a dense hydrophobic layer provided in this example has many non-standard particles, and the interface is relatively rough and grainy. The interface of the uncoated lithium-rich iron-based composite material in Comparative Example 1 is also relatively rough.

### 1.2 X-ray diffraction analysis (XRD) of lithium-rich composite materials:

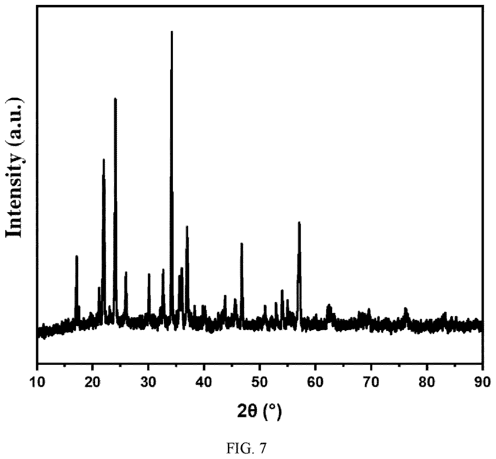

The lithium-rich composite materials provided in the above Examples 1-7 were respectively subjected to X-ray diffraction analysis, in which, the XRD photo of the lithium-rich composite material provided in Example 1 is shown in FIG. 6, and the SEM photo of the lithium-rich material provided in Example 5 is shown in FIG. 7.

It can be seen from FIG. 6 that the lithium-rich composite material in Example 1 has a diffraction peak with a small amount of LiFePO₄ in addition to the main peak of Li₅FeO₄. It can be seen from FIG. 7 that the lithium-rich iron-based composite material is mainly Li₅FeO₄, and the diffraction peaks of LiFePO₄ are relatively obvious.

1.2 Determination of the content of the doping element M in the lithium-rich iron-based core (general formula aLiFeO₂·bLi₂O·cMₓO_{y}) contained in the lithium-rich composite material;

Inductively coupled plasma (ICP) emission spectrometry was used to analyze the content of the doping element M in the lithium-rich iron-based core contained in the lithium-rich composite materials of Examples 1-6. Test results may be referred to Table 1. The y value of the doping element M in Table 1 is the content of the doping element M in the lithium-rich iron-based core.

### 2. Lithium-ion battery example:

The electrochemical performances of the lithium-ion batteries assembled in the above examples of lithium-ion batteries were tested, and the test conditions were as follows:

The assembled batteries were placed at room temperature for 24 hrs, and then performed with a charge and discharge test. The charge and discharge voltage was 2.7 V to 4.3 V. Electrochemical performances of the lithium secondary batteries of Examples 1-6 and Comparative Examples 1-2 may be referred to Table 1.

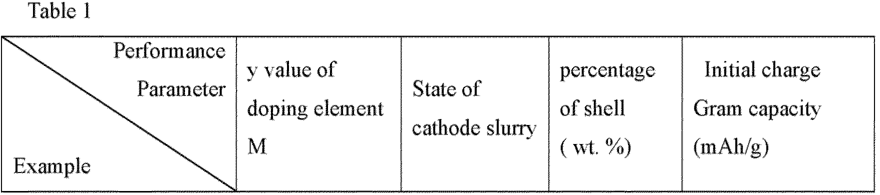

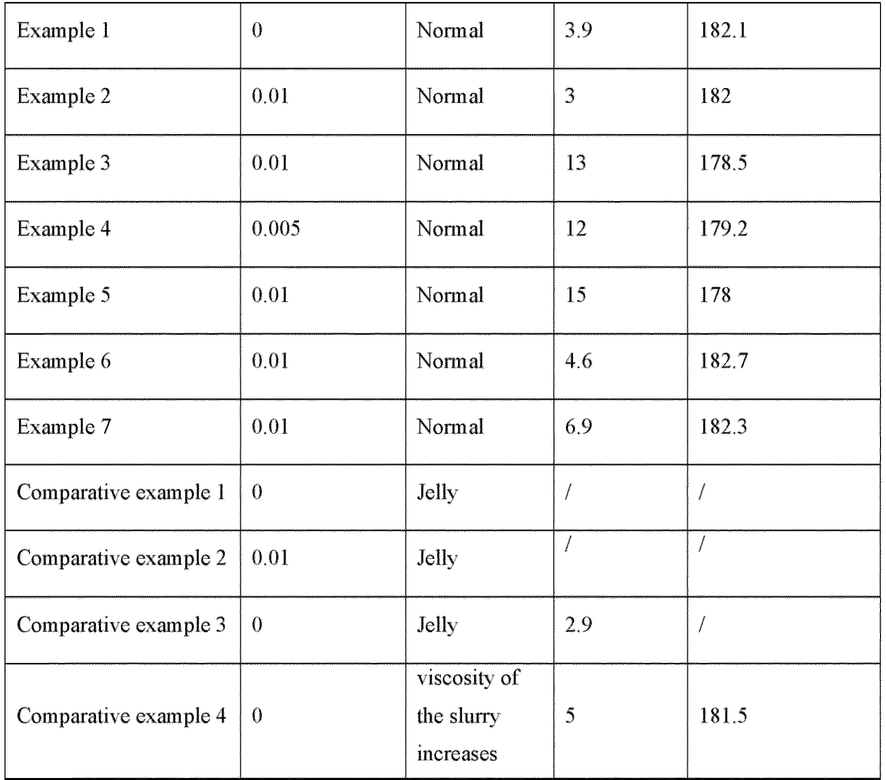

It can be seen from Table 1 that the lithium-rich composite material of the embodiments of the present application was provided with a dense hydrophobic layer, and the cathode slurry prepared using the same did not have the jelly phenomenon and was easy to coat, and when the cathode slurry was added to a lithium secondary battery, the cathode might be made to have higher initial gram capacity and lower initial coulombic efficiency, thereby compensating for the decrease in energy density caused by the initial irreversible lithium loss of the anode. However, the lithium-rich iron-based materials in Comparative Example 1 and Comparative Example 2 were not coated, and jelly was formed due to water absorption during the preparation of the cathode slurry, which was not conducive to the coating of the cathode slurry. Although Comparative example 3 contained a carbon coating layer, it still absorbed water and formed a jelly-like shape. Although Comparative Example 4 contained a ternary material coating layer and did not cause a jelly-like shape during processing, it directly leaded to increase of the viscosity of the slurry, and still leaded to the reduction and instability of its processing performance.

The above examples are only several implementation modes of the present application, and the description thereof is relatively specific and detailed, but should not be construed as limiting the protection scope of the present application. It should be noted that those skilled in the art can make several modifications and improvements without departing from the concept of the present application, which are considered to belong to the protection scope of the present application. Therefore, the scope of protection of the patent application should be based on the appended claims.

## Claims

1. A lithium-rich composite material, comprising a core and a dense hydrophobic layer coated on the core, wherein the core comprises a lithium-rich material, and a material of the dense hydrophobic layer comprises a polyanionic electrochemically active material, and the polyanionic electrochemically active material is a phosphate electrode active material.

2. The lithium-rich composite material according to claim 1, wherein the material of the dense hydrophobic layer further comprises an electronic conductive agent, and the electronic conductive agent and the polyanionic electrochemically active material form a mixture.

3. The lithium-rich composite material according to claim 2, wherein the electronic conductive agent comprises at least one of a conductive carbon material, a conductive oxide, and a conductive organic substance; and/or
in the dense hydrophobic layer, a mass of the electronic conductive agent accounts for 1 wt. % to 6 wt. % of a mass of the polyanionic electrochemically active material.

4. The lithium-rich composite material according to claim 3, wherein the conductive carbon material comprises at least one of an amorphous carbon, a carbon nanotube, a graphite, a carbon black, and a graphene;
the conductive oxide comprises at least one of In₂O₃, ZnO, and SnOz; and
the conductive organic substance comprises a conductive polymer.

5. The lithium-rich composite material according to claim 1, wherein the dense hydrophobic layer comprises an active material coating layer, the active material coating layer covers the core, and a material of the active material coating layer is the polyanionic electrochemically active material.

6. The lithium-rich composite material according to claim 5, wherein the dense hydrophobic layer further comprises an electron conductor packaging layer, and the electron conductor packaging layer is coated on a surface of the active material coating layer away from the core.

7. The lithium-rich composite material according to claim 6, wherein a material of the electron conductor packaging layer comprises at least one of a carbon material, a conductive oxide, and a conductive organic substance; and/or
a thickness of the electron conductor packaging layer is 1 nm to 100 nm.

8. The lithium-rich composite material according to any one of claims 1-7, wherein a content of the polyanionic electrochemically active material accounts for 0.5 wt. % to 30 wt. % of a content of the lithium-rich composite material; and/or
the polyanionic electrochemically active material comprises at least one of lithium iron phosphate, lithium manganese phosphate, lithium manganese iron phosphate, lithium vanadium phosphate, lithium nickel phosphate, and lithium cobalt phosphate; and/or
the lithium-rich material comprises at least one of a lithium-rich iron-based material, a lithium-rich manganese-based material, a lithium-rich nickel-based material, and a lithium-rich cobalt-based material.

9. The lithium-rich composite material according to claim 8, wherein a general chemical formula of the lithium-rich iron-based material is aLiFeO₂·bLi₂O·cMₓO_{y}; wherein a, b, and c in the general chemical formula are numbers of moles and satisfy: a + b ≥ 0.98, c ≤ 0.02, and 1.8 ≤ b/a ≤ 2.1; M is one or more of Si, Ni, Co, Mn, Ti, Al, Cu, V, Zr, and Sn; and 1 ≤ y/x ≤ 2.5, where x is 1 to 3.

10. The lithium-rich composite material according to any one of claims 1-9, wherein a particle size of the lithium-rich composite material satisfies: 1 µm ≤ D50 ≤ 10 µm; and/or
a particle size of the lithium-rich composite material satisfies: 1 µm ≤ D50 ≤ 10 µm, D10/D50 ≥ 0.3, and D90/D50 ≤ 2; and/or
a BET specific surface of the lithium-rich composite material is 0.5 m²/g to 20 m²/g; and/or
a resistivity of the lithium-rich composite material is 1.0 Ω/cm to 500 Q/cm.

11. A preparation method of a lithium-rich composite material, comprising steps of:
forming a dense hydrophobic layer on a surface of a lithium-rich material by using a polyanionic electrochemically active material or a precursor material of the polyanionic electrochemically active material, whereby coating the lithium-rich material and obtaining the lithium-rich composite material; wherein the polyanionic electrochemically active material is a phosphate electrode active material.

12. The preparation method according to claim 11, wherein the method of forming the dense hydrophobic layer on the surface of the lithium-rich material by using the polyanionic electrochemically active material or the precursor material of the polyanionic electrochemically active material comprises the following steps:
mixing a mixture comprising a first electronic conductive agent or a precursor material of the first electronic conductive agent and a precursor material of the polyanionic electrochemically active material with the lithium-rich material, forming a first coating layer on the surface of the lithium-rich material, and obtaining a first precursor of a lithium-rich composite material; and
subjecting the first precursor of the lithium-rich composite material to a first sintering treatment in a protective atmosphere to obtain the lithium-rich composite material.

13. The preparation method according to claim 11, wherein the method of forming the dense hydrophobic layer on the surface of the lithium-rich material by using the polyanionic electrochemically active material or the precursor material of the polyanionic electrochemically active material comprises the following steps:
mixing the precursor material of the polyanionic electrochemically active material with the lithium-rich material, forming a second coating layer on the surface of the lithium-rich material, and obtaining a second precursor of the lithium-rich composite material;
subjecting the second precursor of the lithium-rich composite material to a second sintering treatment in a protective atmosphere, to obtain a lithium-rich composite material having an active material coating layer;
mixing a second electronic conductive agent or a precursor material of the second electronic conductive agent with the lithium-rich composite material having the active material coating layer, forming a third coating layer on a surface of the lithium-rich composite material having the active material coating layer, and obtaining a third precursor of the lithium-rich composite material; and
subjecting the third precursor of the lithium-rich composite material to a third sintering treatment in a protective atmosphere, to obtain the lithium-rich composite material.

14. The preparation method according to any one of claims 11-13, wherein the precursor material of the polyanionic electrochemically active material comprises at least one of a lithium iron phosphate precursor, a lithium manganese phosphate precursor, a lithium manganese iron phosphate precursor, a lithium vanadium phosphate precursor, a lithium nickel phosphate precursor, and a lithium cobalt phosphate precursor.

15. A cathode plate, comprising a cathode current collector and a cathode active layer bonded to a surface of the cathode current collector, wherein the cathode active layer contains the lithium-rich composite material according to any one of claims 1-10 or the lithium-rich composite material prepared by the preparation method according to any one of claims 11-14.

16. A secondary battery, comprising a cathode plate and an anode plate, wherein the cathode plate is the cathode plate according to claim 15.
